# EUROPÄISCHE PATENTSCHRIFT

(11) **EP 1 099 371 B1**
(45) Veröffentlichungstag und Bekanntmachung des Hinweises auf die Patenterteilung: **26.02.2003**
(21) Anmeldenummer: 00123982.1
(22) Anmeldetag: 03.11.2000
(51) Int. Cl.: A01K 3/00, H01B 5/00

(54) **Weidezaunlitzen und -seile**
Electric fencing wire and cord
Fil et corde pour clôture électrique

(30) Priorität: 09.11.1999 DE 19954175
(43) Veröffentlichungstag der Anmeldung: 16.05.2001
(73) Patentinhaber: Trumpf GmbH, 46446 Emmerich (DE)
(72) Erfinder: Else, Alfred, 46446 Emmerich (DE)
(74) Vertreter: KEIL & SCHAAFHAUSEN

(56) Entgegenhaltungen:
- EP-A- 0 274 454
- EP-A- 0 566 489
- WO-A-98/20505
- DE-A- 19 703 390

## Beschreibung

Die Erfindung betrifft Weidezaunlitzen und -seile bestehend aus einem runden Geflecht aus insbesondere monofilen und/oder multifilen synthetischen Garnen und einem oder mehreren um einen von dem Geflecht gebildeten Kern umlaufenden elektrisch leitenden Drähten.

Weidezaunlitzen oder -seile werden zum Einhegen von Weiden verwendet. Die moderne und humane Tierhaltung macht es mehr und mehr erforderlich, dass die Weideflächen schnell erschlossen werden und ihre Umzäumung innerhalb kürzester Zeit mit geringstem Kostenaufwand errichtet und wieder abgebaut werden kann. Die Weideflächenbegrenzung soll dabei zwar einerseits eine ausbruchsichere Umzäumung, andererseits aber auch keine Verletzungsgefahr für die Tiere darstellen. In der Praxis haben sich elektrisch betriebene Weidezäune bewährt, bei deren Berührung ein elektrischer Schlag ausgeteilt wird. Durch diesen elektrischen Schlag weicht das Weidetier von dem Zaun zurück, ohne dass eine Verletzungsgefahr besteht.

Bekannte Weidezäune bestehen dabei z.B. aus runden Monolitzen aus isolierendem Kunststoff, wie z.B. Polyamid, um die ein oder mehrere elektrisch leitende Drähte verwunden sind. In der DE 197 03 390 A1 werden Weidezaunlitzen, Weidezaunbreitbänder und Weidezaunseile beschrieben, die aus nichtleitenden Fasern und einem oder mehreren leitenden Drähten bestehen, die in die nichtleitenden Fasern eingeflochten, eingewirkt, eingewebt, umgewickelt oder in sonstiger Weise eingebacht sind.

Derartige Weidezaunlitzen weisen jedoch den Nachteil auf, dass bei einer Beschädigung eines oder mehrerer der leitenden Drähte die Spannungsversorgung unterbrochen wird und möglicherweise große Teile des Weidezauns nicht mehr unter Spannung stehen. Dann können sie ihre Funktion, die Weidetiere von einem Ausbruch von der Weide abzuhalten, nicht mehr erfüllen.

Es sind auch bereits als Bänder ausgeführte Weidezaunleiter bekannt, bei denen in Längsrichtung der gewebten oder gestrickten Struktur leitende Drähte angeordnet sind. Bei der EP-A-566 489 sind dabei zwei Drähte derart um das Band gewickelt, dass sie sich in regelmäßigen Abständen kreuzen und damit einen elektrischen Kontakt herstellen. Bei dem aus der EP-A-274 454 bekannten Zaunband werden in Längsrichtung des aus nichtleitendem Material bestehenden Bandes Drähte mit eingewebt, die von einem diese Drähte kreuzenden, ebenfalls eingewebten Brückenleiter elektrisch verbunden werden.

Aufgabe der vorliegenden Erfindung ist es nun, bei Weidezaunlitzen und -seilen der eingangs genannten Art eine dauerhafte elektrische Verbindung der umlaufenden elektrisch leitenden Drähte sicherstellen.

Diese Aufgabe wird erfindungsgemäß im Wesentlichen durch die im Anspruch 1 genannten Merkmale gelöst. Durch Verwendung eines Längsdrahtes können mehrere umlaufende stromführende Drähte, die mehrere unabhängige Stromkreise bilden, zwischen zwei Kreuzungspunkten elektrisch überbrückt werden, falls ein oder mehrere der umlaufenden Drähte dazwischen beschädigt oder gar durchtrennt wurden. Auf diese Weise wird zuverlässig gewährleistet, dass der Weidezaun selbst im Fall einer teilweisen Beschädigung weiterhin über seine gesamte Länge unter Spannung steht. Da die umlaufenden Drähten alle weitgehend parallel zueinander verlaufen und sich daher nicht berühren, sorgt der Längsdraht für eine elektrisch leitende Brücke zwischen den umlaufenden Drähten. Außerdem wird im Fall einer Beschädigung eines Drahtes in dessen unmittelbarer Nachbarschaft ein stromführender Draht für den als Strombrücke dienenden Längsdraht zur Verfügung gestellt. Weil die umlaufenden Drähte sich nicht überkreuzen, wird außerdem verhindert, dass sich die Drähte wegen ihres kleineren Auflagedurchmessers zu tief in den weichen Garn einziehen, was zu dessen Beschädigung führen könnte. Eine zu tiefe Einschneidung in den Kern kann im Einsatz auch zu einer ungünstigen Kontaktung führen.

Um die Anzahl der möglichen Brücken zu erhöhen, sind mehrere, vorzugsweise zwei in Längsrichtung verlaufende, zueinander parallel angeordnete Längsdrähte vorgesehen sind. Die beiden Längsdrähte sind dabei vorteilhafterweise so angeordnet, dass deren Einlauf auf dem Umfang der Weidenzaunlitze bzw. - seile gleichmäßig verteilt ist, um eine statische Symmetrie sicherzustellen.

Um einen guten elektrischen Kontakt zwischen den umlaufenden Drähten und den Längsdrähten zu erreichen, ist erfindungsgemäß vorgesehen, dass die umlaufenden Drähte von oben auf den Längsdrähten zu liegen kommen. Durch den aufgrund des weicheren darunterliegenden Garnes aufgebauten Drucks wird aber nicht nur eine bessere Kontaktung gewährleistet, sondern die Längsdrähte bilden sich zwischen den umlaufenden Drähten leicht nach außen, was im späteren Einsatz einen höheren Gebrauchswert darstellt.

Gemäß einer besonders zweckmäßigen Ausführungsform der Erfindung sind die umlaufenden Drähte um die parallel geführten Längsdrähte herumgeflochten. Durch den maschenartigen Aufbau des Geflechtes wird der Längsdraht dabei an den Kreuzungspunkten mit den umlaufenden Drähten in besonders kurzen Abständen sicher fixiert. Außerdem werden die Längsdrähte zusätzlich vor äußeren Beschädigungen geschützt.

Vorzugsweise ist der Durchmesser der Längsdrähte kleiner als der Durchmesser der umlaufenden Drähte. Die Längsdrähte sind damit relativ leicht verbiegbar und können sich der Struktur des Geflechtes anpassen, ohne dessen Steifigkeit maßgeblich zu beeinflussen.

Damit die erfindungsgemäßen Weidezaunlitzen und -seile sowohl die erforderlichen mechanischen als auch elektrischen Eigenschaften besitzen, bestehen die Längsdrähte und/oder die umlaufenden Drähte erfindungsgemäß aus verzinktem Kupfer, Edelstahl oder dgl. korrosionsbeständigem Material.

In Weiterbildung dieses Erfindungsgedankens umschließt das Geflecht aus nichtleitenden Garnen und elektrisch leitenden Drähten einen Kern, vorzugsweise aus flexiblem Monofil- oder Multifilgarn. Ein solcher Kern, der von innen das ihn umgebende verflochtene Garn abstützt, drückt die Längsdrähte fest gegen die umlaufenden Drähte und sorgt damit für einen guten elektrischen Kontakt.

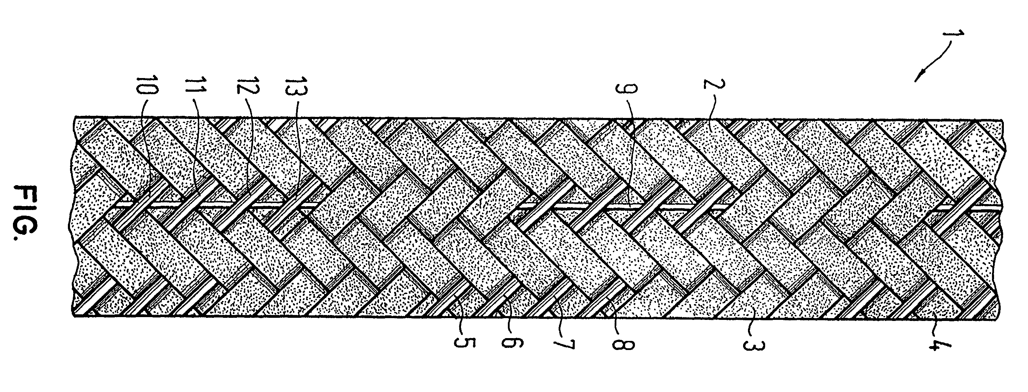

Weitere Merkmale, Vorteile und Anwendungsmöglichkeiten der Erfindung ergeben sich aus der nachfolgenden Beschreibung eines Ausführungsbeispiels und der Zeichnung.

Die einzige Figur zeigt in einer vergrößerten Teilansicht einen Abschnitt einer erfindungsgemäßen Weidezaunlitze bzw. eines Weidezaunseils.

In der Figur ist eine 16 fach geflochtene runde Weidezaunlitze bzw. ein Weidezaunseil 1 dargestellt, die bzw. der aus monofilen und/oder multifilen nichtleitenden synthetischen Garnen geflochten ist. Die Garne 2, 3 sind einander diagonal entgegenlaufend zu einem runden Geflecht verflochten. Im Inneren dieses Geflechts 4 ist ein nicht dargestellter Kern ausgebildet, der ebenfalls aus einem Monofil- oder Multifilgarn besteht.

Das aus den rechtsumlaufenden Garnen 2 und den linksumlaufenden Garnen 3 gebildete runde Geflecht 4 wird von vier nur in einer Laufrichtung umlaufenden elektrisch leitenden Drähten 5, 6, 7, 8 umgeben. Die umlaufenden Drähe überkreuzen sich nicht.

Zusätzlich zu den umlaufenden Drähten 5, 6, 7, 8, sind zwei in Längsrichtung der Weidezaunlitze 1 an diesen befestigte elektrisch leitende Längsdrähte 9 vorgesehen, von denen nur einer dargestellt ist. Die Längsdrähte 9 verlaufen parallel an gegenüberliegenden Seiten der Weidezaunlitze 1. Sie sind derart in das Geflecht 4 eingezogen, dass sie oberhalb der rechtsumlaufenden Garne 2 und unterhalb der umlaufenden Drähte 5, 6, 7, 8 bzw. der linksumlaufenden Garne 3 zu liegen kommen. Die Längsdrähte 9 sind an Kreuzungspunkten 10, 11, 12, 13 mit jeweils einem der umlaufenden Drähte 5, 6, 7, 8 elektrisch leitend verbunden.

Die vier nebeneinander liegenden, annähernd parallel zueinander umlaufenden Drähte 5, 6, 7, 8 sind mit entsprechenden rechtsumlaufenden Garnen 2 in zweiflechtiger Bindung miteinander verflochten. Dies bedeutet, dass wenn der umlaufende Draht 5 unterhalb eines rechtsumlaufenden Garnes 2 verläuft und damit von diesen gehalten wird, kommt der angrenzende Draht 6 oberhalb des rechtsumlaufenden Garns 2 zu liegen und ist damit nicht abgedeckt. Dieses Flechtmuster setzt sich periodisch fort. Bei Berührung der unter Spannung stehenden Drähte 5, 6, 7, 8 an den offenliegenden Stellen wird ein elektrischer Schlag ausgeteilt.

Unterhalb der Drähte 5, 6, 7, 8 und oberhalb der rechtsumlaufenden Garne 2 befinden sich der Längsdraht 9, der an den Kreuzungspunkten 10, 11, 12, 13 von unten gegen die entsprechenden Drähte 5, 6, 7, 8 gedrückt wird. Ein besonders guter elektrischer Kontakt wird dadurch erreicht, dass der Längsdraht 9 einen geringeren Durchmesser aufweist als die umlaufenden Drähte 5, 6, 7, 8 und sich unter dem nach außen wirkenden Druck des nicht dargestellten flexiblen Kerns der Form der umlaufenden Drähte anpasst. Somit dient der Längsdraht 9 als zuverlässige elektrische Brücke zwischen den ansonsten gegeneinander isolierten umlaufenden Drähten 5, 6, 7, 8.

Wenn während des Einsatzes der Weidezaunlitze 1 der umlaufende Draht 5 an einer nicht dargestellten Stelle durch eine Beschädigung unterbrochen wird, ist damit auch die Verbindung mit der Spannungsquelle unterbrochen. Diese Verbindung wird nun von dem Längsdraht 9 dadurch wiederhergestellt, dass er den spannungslosen Draht 5 elektrisch mit den noch unter Spannung stehenden Drähten 6, 7 und 8 verbindet.

Die Erfindung ist nicht auf das dargestellte Geflecht 4 beschränkt. Auch kann die Anordnung von vier aufeinanderfolgenden umlaufenden Drähten 5, 6, 7, 8 je nach Anforderung geändert werden. Häufig werden Flechtmuster verwendet, bei denen jeweils ein leitender Draht 5 und ein linksumlaufendes Garn 3 abwechseln. Es sind auch Geflechte möglich, bei denen nur ein leitender Draht 5 vorgesehen ist. Dann überbrückt der Längsdraht 9 den leitenden Draht 5 an aufeinanderfolgenden Kreuzungspunkten 10 nach jeweils einem Umlauf des Drahtes 5 um die Weidezaunlitze 1.

### Bezugszeichenliste:

- 1: Weidezaunseil
- 2: rechtsumlaufendes Garn
- 3: linksumlaufendes Garn
- 4: Geflecht
- 5: umlaufender Draht
- 6: umlaufender Draht
- 7: umlaufender Draht
- 8: umlaufender Draht
- 9: Längsdraht
- 10: Kreuzungspunkt
- 11: Kreuzungspunkt
- 12: Kreuzungspunkt
- 13: Kreuzungspunkt

## Patentansprüche

1. Weidezaunlitzen und -seile bestehend aus einem runden Geflecht aus insbesondere monofilen und/oder multifilen synthetischen Garnen und mehreren um einen von dem Geflecht gebildeten Kern umlaufenden elektrisch leitenden Drähten (5, 6, 7, 8), **dadurch gekennzeichnet, dass** mehrere, vorzugsweise vier nur in einer Laufrichtung um den Kern der Weidezaunlitzen und -seile (1) ohne Überkreuzen umlaufende elektrisch leitende Drähte (5, 6, 7, 8) und mindestens ein in Längsrichtung der Weidezaunlitzen und -seile (1) geführter elektrisch leitender Längsdraht (9) vorgesehen sind und dass der Längsdraht (9) an Kreuzungspunkten (10, 11, 12, 13) mit den umlaufenden Drähten (5, 6, 7, 8) elektrisch leitend in Kontakt ist.

2. Weidezaunlitzen und -seile nach Anspruch 1, **dadurch gekennzeichnet, dass** mehrere, vorzugsweise zwei in Längsrichtung verlaufende, zueinander parallel angeordnete Längsdrähte (9) vorgesehen sind.

3. Weidezaunlitzen und -seile nach einem der Ansprüche 1 oder 2, **dadurch gekennzeichnet, dass** die umlaufenden Drähte (5, 6, 7, 8) auf den Längsdrähten (9) zu liegen kommen.

4. Weidezaunlitzen und -seile nach einem der Ansprüche 1 bis 3, **dadurch gekennzeichnet, dass** die umlaufenden Drähte (5, 6, 7, 8) um die parallel geführten Längsdrähte (9) herumgeflochten sind.

5. Weidezaunlitzen und -seile nach einem der Ansprüche 1 bis 4, **dadurch gekennzeichnet, dass** der Durchmesser der Längsdrähte (9) kleiner ist als der Durchmesser der umlaufenden Drähte (5, 6, 7, 8).

6. Weidezaunlitzen und -seile nach einem der vorhergehenden Ansprüche, **dadurch gekennzeichnet, dass** die Längsdrähte (9) und/oder die umlaufenden Drähte (5, 6, 7, 8) aus verzinktem Kupfer, Edelstahl oder dgl. korrosionsbeständigem Material bestehen.

7. Weidezaunlitzen und -seile nach einem der vorhergehenden Ansprüche 1, **dadurch gekennzeichnet, dass** das Geflecht (4) aus nichtleitenden Garnen (2, 3) und leitenden Drähten (5, 6, 7, 8; 9) einen Kern, vorzugsweise aus flexiblem Monofil- oder Multifilgarn, umschließt.

## Claims

1. Electric fencing flexes and electric fencing ropes consisting of a round plaited material of particularly monofil and/or multifil synthetic yams and a plurality of electrically conducting wires (5, 6, 7, 8) surrounding a core built from the plaited material, **characterized in that**
a plurality of, preferably four, electrically conducting wires (5, 6, 7, 8) surrounding only in one direction the core of the electric fencing flexes and electric fencing ropes (1) without crossing each other, and at least one electrically conducting longitudinal wire (9) guided in longitudinal direction of the electric fencing flexes and electric fencing ropes (1) are provided and that
the longitudinal wire (9) is in electrically conducting contact with the surrounding wires (5, 6, 7, 8) at junctions (10, 11, 12, 13).

2. Electric fencing flexes and electric fencing ropes according to claim 1, **characterized in that** a plurality of, preferably two, longitudinal wires (9) extending in longitudinal direction and being disposed parallel to each other are provided.

3. Electric fencing flexes and electric fencing ropes according to one of claims 1 or 2, **characterized in that** the surrounding wires (5, 6, 7, 8) are placed upon the longitudinal wires (9).

4. Electric fencing flexes and electric fencing ropes according to one of claims 1 to 3, **characterized in that** the surrounding wires (5, 6, 7, 8) are plaited around the parallely guided longitudinal wires (9).

5. Electric fencing flexes and electric fencing ropes according to one of claim 1 to 4, **characterized in that** the diameter of the longitudinal wires (9) is smaller than the diameter of the surrounding wires (5, 6, 7, 8).

6. Electric fencing flexes and electric fencing ropes according to one of the preceding claims, **characterized in that** the longitudinal wires (9) and/or the surrounding wires (5, 6, 7, 8) are made of zinc-coated copper, special steel or the like corrosion resisting material.

7. Electric fencing flexes and electric fencing ropes according to one of the preceding claims, **characterized in that** the plaited material (4) made of nonconducting yarns (2, 3) and conducting wires (5, 6, 7, 8, 9) surrounds a core, preferably made of flexible monofilament or multifilament yam.

## Revendications

1. Torons et cordes pour clôture électrique composés d'une tresse ronde à base notamment de fils synthétiques monofils et / ou multifils et de plusieurs fils (5, 6, 7, 8) conducteurs d'électricité s'enroulant autour d'un noyau formé par le treillis, **caractérisés en ce que** sont prévus plusieurs fils (5, 6, 7, 8) conducteurs d'électricité, de préférence quatre, ne s'enroulant autour du noyau des torons et des cordes pour clôture électrique (1) que dans une direction sans se croiser et au moins un câble longitudinal (9) conducteur d'électricité, dirigé dans la direction longitudinale des torons et des cordes pour clôture électrique, et **en ce que** le câble longitudinal (9) est en contact électrique aux points de croisement (10, 11, 12, 13) avec les fils enroulés.

2. Torons et cordes pour clôture électrique selon la revendication 1, **caractérisés en ce que** plusieurs, de préférence deux, câbles longitudinaux (9) sont prévus s'étendant en direction longitudinale et parallèles entre eux.

3. Torons et cordes pour clôture électrique selon l'une des revendications 1 ou 2, **caractérisés en ce que** les fils enroulés (5, 6, 7, 8) sont posés sur les câbles longitudinaux (9).

4. Torons et cordes pour clôture électrique selon l'une des revendications 1 à 3, **caractérisés en ce que** les fils enroulés (5, 6, 7, 8) sont tressés autour des câbles longitudinaux (9) parallèles.

5. Torons et cordes pour clôture électrique selon l'une des revendications 1 à 4, **caractérisés en ce que** le diamètre des câbles longitudinaux (9) est inférieur au diamètre des fils enroulés (5, 6, 7, 8).

6. Torons et cordes pour clôture électrique selon l'une des revendications précédentes, **caractérisés en ce que** les câbles longitudinaux (9) et / ou les fils enroulés (5, 6, 7, 8) sont faits en cuivre zingué, en acier spécial ou dans un matériau similaire résistant à la corrosion.

7. Torons et cordes pour clôture électrique selon l'une des revendications précédentes, **caractérisés en ce que** la tresse (4) en fils non conducteurs (2, 3) et en fils conducteurs (5, 6, 7, 8) renferme un noyau de préférence en fil monofil ou multifil flexible.
